(19) Europäisches Patentamt
European Patent Office
Office européen des brevets

(11) **EP 3 660 742 B1**

(12) **EUROPEAN PATENT SPECIFICATION**

(45) Date of publication and mention of the grant of the patent:
**20.07.2022 Bulletin 2022/29**

(21) Application number: **18209633.9**

(22) Date of filing: **30.11.2018**

(51) International Patent Classification (IPC):
**G06V 10/774** $^{(2022.01)}$    **G06K 9/62** $^{(2022.01)}$

(52) Cooperative Patent Classification (CPC):
**G06K 9/6256; G06K 9/6247; G06K 9/6278; G06K 9/6298**

(54) **METHOD AND SYSTEM FOR GENERATING IMAGE DATA**

VERFAHREN UND SYSTEM ZUR ERZEUGUNG VON BILDDATEN

PROCÉDÉ ET SYSTÈME DE GÉNÉRATION DE DONNÉES D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.06.2020 Bulletin 2020/23**

(73) Proprietor: **Secondmind Limited**
**Cambridge, Cambridgeshire CB2 1LA (GB)**

(72) Inventors:
• **HENSMAN, James**
**Cambridge, Cambridgeshire CB2 1LA (GB)**
• **VAN DER WILK, Mark**
**Camrbidge, CB2 1LA (GB)**
• **DUTORDOIR, Vincent**
**Cambridge, CB2 1LA (GB)**

(74) Representative: **EIP**
**Fairfax House**
**15 Fulwood Place**
**London WC1V 6HU (GB)**

(56) References cited:
• VINCENT DUTORDOIR ET AL: "Gaussian Process Conditional Density Estimation", ARXIV.ORG, CORNELL UNIVERSITY LIBRARY, 201 OLIN LIBRARY CORNELL UNIVERSITY ITHACA, NY 14853, 30 October 2018 (2018-10-30), XP080933204,
• KENNETH BLOMQVIST ET AL: "Deep convolutional Gaussian processes", ARXIV.ORG, CORNELL UNIVERSITY LIBRARY, 201 OLIN LIBRARY CORNELL UNIVERSITY ITHACA, NY 14853, 6 October 2018 (2018-10-06), XP081058284,
• MARK VAN DER WILK ET AL: "Convolutional Gaussian Processes", ARXIV.ORG, CORNELL UNIVERSITY LIBRARY, 201 OLIN LIBRARY CORNELL UNIVERSITY ITHACA, NY 14853, 6 September 2017 (2017-09-06), XP080818934,
• Dustin Tran ET AL: "The Variational Gaussian Process", , 17 April 2016 (2016-04-17), XP055533256, Retrieved from the Internet: URL:https://arxiv.org/pdf/1511.06499.pdf [retrieved on 2018-12-12]
• Vincent Dutordoir: "Non-Stationary Surrogate Modeling with Deep Gaussian Processes", , 1 January 2017 (2017-01-01), XP055591583, Retrieved from the Internet: URL:https://lib.ugent.be/fulltxt/RUG01/002/367/115/RUG01-002367115_2017_0001_AC.pdf [retrieved on 2019-05-24]

**Description**

Technical Field

The present invention relates to methods and systems for generating image data.

Background

Generative models can be used to produce synthetic images by drawing samples from a probability density distribution. Training such a generative model involves unsupervised learning of a probability density distribution underlying a set of training images, in a process referred to as density estimation. The learned probability density distribution can then be used to generate synthetic images that resemble the training data. Examples of generative models capable of generating synthetic data include variational autoencoders (VAEs), importance weighted autoencoders (IWAEs), and generative adversarial networks (GANs), all of which are based on neural networks. In tandem to these methods, generative models based on Gaussian processes (GPs) have been developed, including the Gaussian process latent variable model (GP-LVM) proposed in *Gaussian Process Latent Variable Models for Visualisation of High Dimensional Data,* N. Lawrence, 2004. GP models are capable of providing well-calibrated uncertainty estimates, and have been shown to outperform neural network models in low-data regimes.

Most GP models rely on rudimentary and local metrics for generalisation (for example, Euclidian distances between data points), and accordingly do not adequately capture non-local generalisation structures within data. Recently, a method was proposed to incorporate convolutional structure into GP models (Convolutional Gaussian Processes, van der Wilk et al, 31st Conference on Neural Information Processing Systems, 2017). The proposed method allows for non-local generalisation, but is not applicable to the generation of image data.

The article Gaussian Process Conditional Density Estimation, V. Dutordoir et al, arXiv:1810.12750, 2018, discusses extending an input of a conditional density estimation model with latent variables and using Gaussian processes to map the augmented input onto samples from the conditional distribution. The article Deep convolutional Gaussian processes, K. Blomqvist et al, arXiv:1810.03052, 2018, discusses a deep Gaussian process architecture for detecting hierarchical combinations of local features for image classification.

Summary

According to a first aspect of the present invention, there is provided a computer-implemented method of training a computer system to generate output images in dependence on a plurality of training images $I_n$. The method includes receiving training data comprising a plurality of image vectors $\mathbf{x}_n$ each corresponding to a respective one of the plurality of training images $I_n$. The method further includes initialising a first set of parameters comprising, for each of the plurality of image vectors $\mathbf{x}_n$, one or more parameters for a respective variational distribution over latent variables $\mathbf{w}_n$, and initialising a second set of parameters for a deep Gaussian process (GP). The deep GP comprises: a first GP $q(f_{\text{int}})$ defined by a first kernel $k_{\text{int}}$ and corresponding to a distribution over first functions $f_{\text{int}}$ for mapping latent variables $\mathbf{w}_n$ to respective latent image vectors $\mathbf{h}_n$, each latent image vector $\mathbf{h}_n$ comprising a plurality of elements; and a second GP $q(f_{\text{dec}})$ defined by a second kernel $k_{\text{dec}}$ and corresponding to a distribution over second functions $f_{\text{dec}}$ for mapping latent image vectors $\mathbf{h}_n$ to respective output image vectors $\mathbf{x}_n$. The method further includes iteratively updating the first set of parameters and the second set of parameters to increase an average probability density associated with each image vector $\mathbf{x}_n$ being generated when a sampled latent variable $\mathbf{w}_n$ is passed through a first function $f_{\text{int}}$ sampled from the first GP $q(f_{\text{int}})$ and a second function $f_{\text{dec}}$ sampled from the second GP $q(f_{\text{dec}})$. The second functions $f_{\text{dec}}$ map patch vectors $\mathbf{h}_n^{[p]}$ of a latent image vector $\mathbf{h}_n$ to respective different elements $x_{n,p}$ of an output image vector $\mathbf{x}_n$, each patch vector $\mathbf{h}_n^{[p]}$ of said latent image vector $\mathbf{h}_n$ comprising a subset of the elements of said latent image vector $\mathbf{h}_n$. The second kernel $k_{\text{dec}}$ takes into account a location $(i(p),j(p))$ in the output image $I_n$ of a pixel corresponding to an element $x_{n,p}$ of the output image vector $\mathbf{x}_n$. The second kernel $k_{\text{dec}}$ is a product of a patch component $k_{\text{patch}}$ and a location component $k_{\text{loc}}$, wherein the patch component $k_{\text{patch}}$ takes into account the elements of the patch vector $\mathbf{h}_n^{[p]}$, and the location component $k_{\text{loc}}$ takes into account the location $(i(p),j(p))$ in the training image $I_n$ of the pixel corresponding to the element $x_{n,p}$ of the output image vector $\mathbf{x}_n$, such that

$$k_{\text{dec},p,p'}\left(\mathbf{h}_m, \mathbf{h}_n\right) = k_{\text{patch}}\left(\mathbf{h}_n^{[p]}, \mathbf{h}_m^{[p']}\right) \times k_{\text{loc}}\left((i(p), j(p)), (i(p'), j(p'))\right).$$

According to a second aspect of the invention, there is provided a computer-implemented method of generating a first output image $I^*$. The method includes storing a set of parameters for a deep Gaussian process (GP), where the deep GP comprises: a first GP $q(f_{\text{int}})$ defined by a first kernel $k_{\text{int}}$ and corresponding to a distribution over first functions $f_{\text{int}}$ for mapping latent variables $\mathbf{w}_n$ to respective latent image vectors $\mathbf{h}_n$, each latent image vector $\mathbf{h}_n$ comprising a plurality of elements; and a second GP $q(f_{\text{dec}})$ defined by a second kernel $k_{\text{dec}}$ and corresponding to a distribution over second functions $f_{\text{dec}}$ for mapping latent image vectors $\mathbf{h}_n$ to respective output image vectors $\mathbf{x}_n$. The method further includes sampling from a prior distribution p(w) over latent variables $\mathbf{w}$ to generate a sampled latent variable $\mathbf{w}^*$, sampling from the first GP $q(f_{\text{int}})$ evaluated at the sampled latent variable $\mathbf{w}^*$ to generate a sampled latent image vector $\mathbf{h}^*$, and sampling from the second GP $q(f_{\text{dec}})$ evaluated at the sampled latent image vector $\mathbf{h}^*$ to generate a first output image vector $\mathbf{x}^*$ corresponding to the first output image $I^*$. The second functions $f_{\text{dec}}$ map patch vectors $\mathbf{h}_n^{[p]}$ of a latent image vector $\mathbf{h}_n$ to respective different elements $x_{n,p}$ of an output image vector $\mathbf{x}_n$, each patch vector $\mathbf{h}_n^{[p]}$ of said latent image vector $\mathbf{h}_n$ comprising a subset of the elements of said latent image vector $\mathbf{h}_n$. The second kernel $k_{\text{dec}}$ takes into account a location $(i(p),j(p))$ in the output image $I_n$ of a pixel corresponding to an element $x_{n,p}$ of the output image vector $\mathbf{x}_n$. The second kernel $k_{\text{dec}}$ is a product of a patch component $k_{\text{patch}}$ and a location component $k_{\text{loc}}$, wherein the patch component $k_{\text{patch}}$ takes into account the elements of the patch vector $\mathbf{h}_n^{[p]}$, and the location component $k_{\text{loc}}$ takes into account the location $(i(p),j(p))$ in the training image $I_n$ of the pixel corresponding to the element $x_{n,p}$ of the output image vector $\mathbf{x}_n$, such that

$$k_{\text{dec},p,p'}\left(\mathbf{h}_m, \mathbf{h}_n\right) = k_{\text{patch}}\left(\mathbf{h}_n^{[p]}, \mathbf{h}_m^{[p']}\right) \times k_{\text{loc}}\left((i(p), j(p)), (i(p'), j(p'))\right).$$

Providing that the second functions map patches of latent images to output images introduces prior correlations between pixels in generated images. Introducing such correlation improves the performance of the method for image generation, particularly in low data regimes.

Further features and advantages of the invention will become apparent from the following description of preferred embodiments of the invention, given by way of example only, which is made with reference to the accompanying drawings.

Brief Description of the Drawings

Figure 1 shows an example of an image-to-image mapping;
Figure 2 shows randomly sampled images from four prior probability distributions;
Figure 3 shows a flow diagram representing a training phase in accordance with the present invention;
Figure 4 schematically shows a training phase in accordance with the present invention;
Figure 5 shows a flow diagram representing an image generation phase in accordance with the present invention;
Figure 6 schematically shows an image generation phase in accordance with the present invention; and
Figure 7 shows an example computing device for performing a method of generating image data.

Detailed Description

**Deconvolutional Gaussian processes**

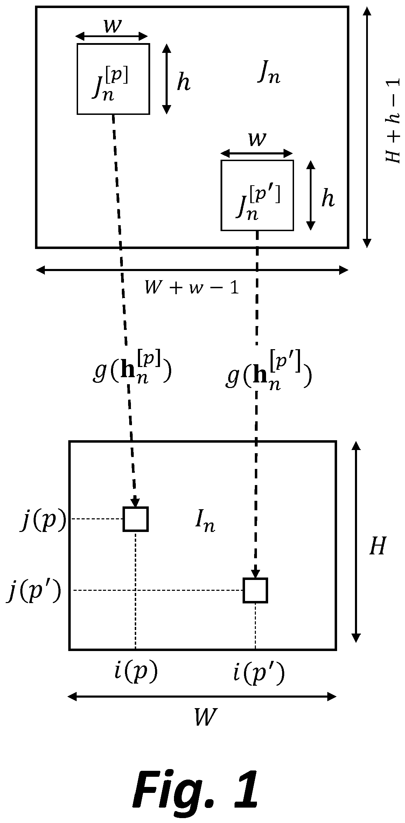

Figure 1 shows an image $I_n$ corresponding to an image data vector $\mathbf{x}_n$. The image data vector $\mathbf{x}_n$ is taken from an image dataset $X = \{\mathbf{x}_n\}_{n=1}^{N}$ containing a set of $N$ image data vectors representing $N$ images $\{I_n\}_{n=1}^{N}$. In this example, each element of each image vector $\mathbf{x}_n$ represents a pixel intensity value for a pixel in a corresponding image, and accordingly has an associated location in the image. Each of the images contains $P = W \times H$ pixels, and accordingly each image vector contains $P$ elements, such that $\mathbf{x}_n = \left\{ x_{n,p} \right\}_{p=1}^{P}$ for $n = 1,2, ..., N$. In this example, the image $I_n$ is a black and white image, and accordingly pixel intensities have values $x_{n,p} \in \{0,1\}$. In other examples, image data may include greyscale images or colour images. Accordingly, image data vectors may include elements corresponding to each of several colour channels, such as red, green and blue colour channels.

Elements of the image data vector $\mathbf{x}_n$ are arranged in conformity with an associated co-ordinate system of the image $I_n$, such that each element of the image data vector $\mathbf{x}_n$ has an associated pair of co-ordinates. In Figure 1, a first pixel, labelled $p$, has a first location within the co-ordinate system of the image and a second pixel, labelled p', has a second location within the co-ordinate system of the image. The first pixel $p$ is associated with the Cartesian co-ordinates $(i(p),j(p))$ and the second pixel $p'$ is associated with the Cartesian co-ordinates $(i(p'), j(p'))$, where the functions $i(\cdot)$ and $j(\cdot)$ return Cartesian co-ordinates associated with a pixel in the image.

Each pixel of the image $I_n$ is assumed to be generated from a patch of $E = w \times h$ pixels taken from a latent image $J_n$, as will be described in more detail hereafter. The latent image $J_n$ contains $D$ pixels and corresponds to a latent image vector $\mathbf{h}_n \in \mathbb{R}^D$. The latent image $J_n$ contains $P$ latent image patches $\left\{ J_n^{[p]} \right\}_{p=1}^{P}$, where the indices $p = 1, ...,$ $P$ correspond to the labels of the pixels in the image $I_n$. The image patches are represented by patch vectors $\left\{ \mathbf{h}_n^{[p]} \right\}_{p=1}^{P}$, each including a subset of the elements of the latent image vector $\mathbf{h}_n$. In the present example, adjacent latent image patches are overlapping and separated by one pixel in each direction, and therefore the total number of latent image patches in the latent image is given by $D = (W + w - 1) \times (H + h\text{-}1)$. In other examples, adjacent patches may be separated by other numbers of pixels, analogous to using different strides and padding for convolutional filters in convolutional neural networks (CNNs). In some examples, padding of a latent image may be used to match the sizes such that $D = P$.

A deconvolutional GP is constructed by introducing a patch response function $g\colon \mathbb{R}^E \to \mathbb{R}$ that maps latent image patches to patch response values, as in Convolutional Gaussian Processes, van der Wilk *et al,* mentioned in the background section above. The patch response function is given a GP prior as shown in Equation (1):

$$g \sim \mathrm{GP}\left( 0, k_g \left( \mathbf{h}_n^{[p]}, \mathbf{h}_m^{[p']} \right) \right), \tag{1}$$

where $k_g$ is referred to as the patch response kernel. Instead of defining a scalar global response function as a sum of patch response functions, as was the case in previous work, in the present case a vector-valued deconvolutional response function $f_{\mathrm{dec}}\colon \mathbb{R}^D \to \mathbb{R}^P$ is defined as shown in Equation (2):

$$f_{\mathrm{dec}}(\mathbf{h}) = \left\{ f_{\mathrm{dec},p}(\mathbf{h}) \right\}_{p=1}^{P} = \left\{ g\left( \mathbf{h}^{[p]} \right) \right\}_{p=1}^{P}. \tag{2}$$

The GP prior on $g$ shown in Equation (1) results in a multi-output GP prior over $f_{\mathrm{dec}}$, with a tensor-valued global response kernel given by the covariance between outputs, as shown in Equation (3):

$$k_{\mathrm{dec},p,p'}(\mathbf{h}_m, \mathbf{h}_n) = \mathbb{C}\left[ f_{\mathrm{dec},p}(\mathbf{h}_m), f_{\mathrm{dec},p'}(\mathbf{h}_n) \right] = k_g\left( \mathbf{h}_m^{[p]}, \mathbf{h}_n^{[p']} \right). \tag{3}$$

The global response kernel of Equation (3) is referred to as the Multi Output Convolutional Kernel (MOCK). The global response function $f_{\mathrm{dec}}$ generates image outputs from latent image inputs, playing an analogous role to deconvolutional layers in a convolutional neural network (CNN) (with the latent image input being analogous to a feature map in the case of a CNN). Because the patch response kernel depends only on the elements of the latent image patches, the MOCK is translation equivariant, such that a translation of a latent image feature in a latent image result in the same translation of a corresponding feature in the output image.

**Translation insensitive convolutional kernels**

The deconvolutional GP model also described in the previous section may be extended by making the output of the patch response kernel $k_g$ depend not only on the elements of the latent image patches, but on the pixelwise locations of the pixels associated with the patches. The resulting GP prior over the patch response function is shown in Equation (4):

$$g \sim \mathrm{GP}\left(0, k_g\left(\left(\mathbf{h}_n^{[p]}, i(p), j(p)\right), \left(\mathbf{h}_m^{[p']}, i(p'), j(p')\right)\right)\right), \qquad (4)$$

and the global response kernel is given by Equation (5):

$$k_{\mathrm{dec},p,p'}(\mathbf{h}_m, \mathbf{h}_n) = \mathbb{C}\left[f_{\mathrm{dec},p}(\mathbf{h}_m), f_{\mathrm{dec},p'}(\mathbf{h}_n)\right]$$
$$= k_g\left(\left(\mathbf{h}_m^{[p]}, i(p), j(p)\right), \left(\mathbf{h}_n^{[p']}, i(p'), j(p')\right)\right). \qquad (5)$$

The present example differs from the example described above in that the patch response kernel $k_g$ takes into account not only the elements of the latent image patches, but also the locations of the associated pixels in the output image. In contrast with the MOCK of Equation (3), the kernel of Equation (5) is not translation equivariant. However, the dependence of the kernel of Equation (5) on patch location is generally smoothly varying, resulting in the kernel of Equation (5) exhibiting *translation insensitivity,* in which a continuous translation of a latent image feature in a latent image may result in a gradual nontrivial transformation of a corresponding feature in the output image. Accordingly, the kernel of Equation (5) is referred to as the Multi-Output Translation Insensitive Convolutional Kernel (MOTICK). Furthermore, the degree of translation sensitivity may be automatically be adapted to fit a given training dataset, as will be described hereafter.

In a specific example, the patch response kernel $k_g$ is formed as a product of a patch component $k_{\mathrm{patch}}$ that takes into account the elements of the latent image patches, and a location component $k_{\mathrm{loc}}$ that takes into account the locations of the pixels, as shown by Equation (6):

$$k_g\left(\left(\mathbf{h}_n^{[p]}, i(p), j(p)\right), \left(\mathbf{h}_m^{[p']}, i(p'), j(p')\right)\right)$$
$$= k_{\mathrm{patch}}\left(\mathbf{h}_n^{[p]}, \mathbf{h}_m^{[p']}\right) \times k_{\mathrm{loc}}\left((i(p), j(p)), (i(p'), j(p'))\right). \qquad (6)$$

The patch component $k_{\mathrm{patch}}$ and the location component $k_{\mathrm{loc}}$ may each be any kernel suitable for GP models. Examples of suitable kernels include squared exponential kernels, Matern kernels, Ornstein-Uhlenbeck kernels, and periodic kernels. The choice of kernel will depend on the specifics of the task. For example, a periodic kernel may be chosen for $k_{\mathrm{loc}}$ if the images in the dataset $X$ are expected to exhibit periodicity on the scale of the image. Furthermore, certain kernels may have attractive properties for implementation, depending on the computational implementation being employed.

In some examples, the output of the patch response kernel $k_g$ depends on the Euclidian distance $\left|\mathbf{h}_m^{[p]} - \mathbf{h}_n^{[p']}\right|$ between patch vectors $\mathbf{h}_m^{[p]}$ and $\mathbf{h}_n^{[p']}$, which captures the similarity of corresponding image patches $J_m^{[p]}$ and $J_n^{[p']}$. In other examples, alternative metrics may be used to capture similarities between image patches. In the case of the MOTICK, the output of the kernel $k_g$ also depends on the locations $(i(p), j(p))$ and $(i(p'), j(p'))$ of the associated output pixels. In a specific example, the patch response kernel $k_g$ is a function of the distance $\sqrt{(i(p) - i(p'))^2 + (j(p) - j(p'))^2}$ between the locations of the corresponding output pixels. In other examples, the output of a patch response kernel may depend on pixel locations in a different way. For example, for certain tasks it may be appropriate to construct a patch response kernel $k_g$ whose output depends only on the vertical separation of pixels, or depends differently on the vertical and horizontal separation of pixels (for example, if the image is expected to exhibit periodicity in only one of these directions). The dependence of the output of $k_g$ on the locations of pixels allows the resulting GP model to learn to treat features at different locations in an image differently, resulting in a generative model that more faithfully captures the underlying probability density distribution of a set of training images.

The sensitivity of the GP model to pixel location (referred to as translation sensitivity) depends on the functional dependence of the patch response kernel $k_g$ on pixel location, which may in turn depend on one or more hyperparameters of $k_g$. For example, the translation sensitivity may depend on a length scale hyperparameter $l_{loc}$ encoding a characteristic length scale associated with location dependence of the patch response kernel. In an example where the patch response kernel has a product form as shown in Equation (6), the length scale hyperparameter may be a hyperparameter of the location component $k_{loc}$. Although for certain applications it may be desirable to configure the translation sensitivity manually (for example by fixing or restricting the length scale hyperparameter of a location component), in other examples it will be advantageous to allow the translation sensitivity to be learned in order to fit a set of training data, for example by optimising a length scale hyperparameter, as will be described in more detail hereafter.

**Image generation**

GP models based on the deconvolutional kernels described above (MOCK and MOTICK) may be used for image generation. Image generation involves a training phase and a test phase. During the training phase, unsupervised learning is used to model an underlying probability density distribution of an image dataset X. During the test phase, new images are generated using the model of the underlying probability distribution.

In order to use MOCK and MOTICK for image generation, a latent variable model (LVM) is employed. In the LVM, a set $W = \{\mathbf{w}_n\}_{n=1}^{N}$ of low-dimensional latent variables is mapped to the image dataset $X$ using a nonlinear GP mapping function $f : \mathbb{R}^Q \to \mathbb{R}^P$, where Q << P. The latent variables may be, for example, 1-, 2-, or 3-dimensional. In the present example, a 2-layer deep GP model is implemented, based a composition of an intermediate response function $f_{int} : \mathbb{R}^Q \to \mathbb{R}^D$ and the deconvolutional response function $f_{dec} : \mathbb{R}^D \to \mathbb{R}^P$ introduced above, as shown in Equation (7):

$$f(\mathbf{w}_n) = \left\{ f_p(\mathbf{w}_n) \right\}_{p=1}^{P} = \left\{ f_{dec,p}\big(f_{int}(\mathbf{w}_n)\big) \right\}_{p=1}^{P}, \qquad (7)$$

where

$$f_{int}(\mathbf{w}_n) = \left\{ f_{int,d}(\mathbf{w}_n) \right\}_{d=1}^{D}. \qquad (8)$$

The intermediate response function $f_{int}$ takes a latent variable $\mathbf{w}_n \in \mathbb{R}^Q$ as an input and outputs a D-dimensional vector corresponding to a latent image, effectively up-scaling the latent variable to the space of latent images. A latent image is an intermediate latent variable having a higher number of dimensions than the input latent variable $\mathbf{w}_n$. The latent image is then passed through the deconvolutional response function $f_{dec}$, to give a P-dimensional output. The output of the deconvolutional response function is processed using a likelihood function, as will be described in more detail hereafter, to give the final P-dimensional output image. In this example, the intermediate response function is given a multi-output GP prior with D uncorrelated outputs, such that $f_{int,d}(\cdot) \sim GP(0, k_{int}(\cdot, \cdot))$ for d = 1, ..., D, though in other examples a correlation may be imposed on the outputs, for example by applying matrices with probabilistic coefficients to the outputs. The kernel $k_{int}$ is referred to as the intermediate response kernel, and may be any suitable form of GP kernel.

The latent variables are given a prior distribution, which in this example is a centred standard Gaussian distribution such that $p(\mathbf{w}_n) = \mathcal{N}(\mathbf{w}_n|\mathbf{0}, \mathbf{I})$ for n = 1, ..., N, though other distributions are possible without departing from the scope of the invention. The training phase involves estimating the posterior distribution over the mapping function $f$. Once the training phase is complete, new synthetic images can be generated by randomly sampling latent variables from the prior distribution, and passing the randomly sampled latent variables through mapping functions sampled from the estimated posterior distribution over $f$.

Using the deconvolutional response function $f_{dec}$ as a layer within the mapping function $f$, as shown in Equation (7), introduces prior correlations between outputs of the mapping function. It is observed that introducing such correlation results in prior structure being imposed in the prior distribution of output images, whilst retaining flexibility of the model to fit the training dataset X. This is particularly advantageous in low-data regimes, where models that do not impose such prior structure typically fail to produce satisfactory results in image generation.

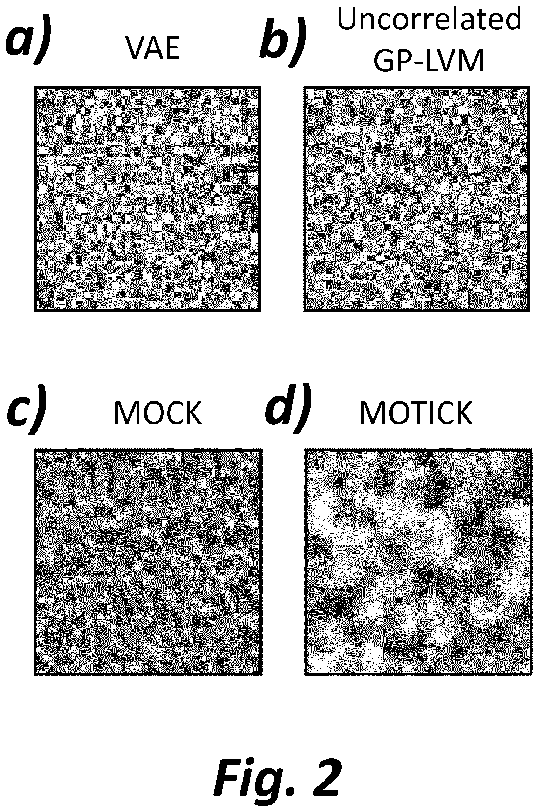

Figure 2 shows images randomly sampled from prior probability density distributions defined over images for four different generative models. The image in Figure 2a was generated using an untrained variational autoencoder (VAE). The image in Figure 2b was generated using an untrained GP-LVM based on a multi-output GP with uncorrelated outputs. The image in Figure 2c was generated using an untrained GP-LVM based on the MOCK. The image in Figure 2d was generated using an untrained GP-LVM based on the MOTICK. It is observed that the VAE model and the uncorrelated GP-LVM generate white noise images. The MOCK generates an image with a degree of underlying structure, manifested by the fact that that neighbouring pixels are partially correlated. The MOTICK generates an image with a higher degree of underlying structure, in which correlations between pixels are highly correlated over a characteristic length scale.

**Training phase**

The present method is an example of a Bayesian inference scheme. The method includes a training phase and an image generation phase. The training phase is based on an application of Bayes' theorem as given by Equation (9):

$$p(\mathbf{f}|X) = \frac{p(X|\mathbf{f})p(\mathbf{f})}{p(X)}, \tag{9}$$

in which:

- $\mathbf{f} = \{f(\mathbf{w}_n)\}_{n=1}^{N}$ is a set of random variables corresponding to evaluations of the mapping function $f$ at the $N$ latent variables $\mathbf{w}_n$ corresponding to the training images $X = \{\mathbf{x}_n\}_{n=1}^{N}$;
- $p(\mathbf{f}|X)$ is a posterior probability distribution of $\mathbf{f}$ conditioned on $X$;
- $p(X|\mathbf{f})$ is a probability distribution of $X$ conditioned on $\mathbf{f}$, referred to as the likelihood;
- $p(\mathbf{f})$ is a prior probability distribution of $\mathbf{f}$ assumed in the model; and
- $p(X)$ is the marginal likelihood.

Treating the training data $X$ as independent and identically distributed (i.i.d.) random variables, the likelihood factorises over the training images and over the dimensions of the training images such that $p(X|\mathbf{f}) = \prod_{n=1}^{N} p(\mathbf{x}_n|f(\mathbf{w}_n)) = \prod_{n=1}^{N} \prod_{p=1}^{P} p(x_{n,p}|f_p(\mathbf{w}_n))$. In the present example, in which the images are black and white images, the likelihood is a Bernoulli likelihood given by Equation (10):

$$p(x_{n,p}|f_p(\mathbf{w}_n)) = \mathcal{B}(x_{n,p}|\phi(f_p(\mathbf{w}_n))), \tag{10}$$

where $\mathcal{B}(x_{n,p}|\phi(f_p(\mathbf{w}_n))) = \phi(f_p(\mathbf{w}_n))^{x_{n,p}} \left(1 - \phi(f_p(\mathbf{w}_n))\right)^{1-x_{n,p}}$ with $x_{n,p} \in \{0,1\}$, and where $\phi(\cdot): \mathbb{R} \rightarrow$ [0,1] is referred to as a response function, and can be any sigmoid function. The response function is also referred to as a "squashing function", and is a monotonically increasing function that maps any real value to the domain [0,1]. Examples of response functions include the logistic function $\phi(f(\mathbf{x}_n)) = 1/(1 + \exp(-f(\mathbf{x}_n)))$ and the probit function $\phi(f(\mathbf{x}_n)) = \int_{-\infty}^{f(\mathbf{x}_n)} \mathcal{N}(a|0,1)\mathrm{d}a$. In other examples, other likelihoods may be used, for example a Gaussian likelihood in the example of greyscale or colour images.

The posterior distribution $p(\mathbf{f}|\mathbf{y})$ consists of evaluations of a posterior process $p(f|\mathbf{y})$ at the training data items. In the present method, the posterior process $p(f|\mathbf{y})$ over the mapping function $f$ is approximated by introducing GPs $q(f_{dec})$, $q(f_{int})$ over the deconvolutional response function $f_{dec}$ and the intermediate response function $f_{int}$, having

marginals specified at M inducing inputs $Z_{\text{dec}} = \{\mathbf{z}_{\text{dec},m}\}_{m=1}^{M_{\text{dec}}}$, $Z_{\text{int}} = \{\mathbf{z}_{\text{int},m}\}_{m=1}^{M_{\text{int}}}$ respectively. In some examples, the deconvolutional inducing inputs $\mathbf{z}_{\text{dec},m} \in \mathbb{R}^P$ are placed in the space of image patches as opposed to the space of images to improve the efficiency of implementation, as will be described in more detail hereafter. The intermediate inducing inputs $\mathbf{z}_{\text{dec},m}$ are placed in the space of latent variables. Outputs of the response functions at the inducing inputs are referred to as inducing variables $\mathbf{u}_{\text{int}} = \{f_{\text{int}}(\mathbf{z}_{\text{int},m})\}_{m=1}^M$ and $\mathbf{u}_{\text{dec}} = \{f_{\text{dec}}(\mathbf{z}_{\text{dec},m})\}_{m=1}^M$, and are distributed according to variational distributions $q(\mathbf{u}_{\text{int}})$, $q(\mathbf{u}_{\text{dec}})$ respectively. A posterior distribution $p(\mathbf{w}_n|\mathbf{x}_n)$ over each latent variable is approximated by a further respective variational distribution $q(\mathbf{w}_n)$. Depending on the specific implementation, the variational distributions may take specific forms, for example Gaussian distributions or mixtures of Gaussian distributions, or may be free-form distributions satisfying known optimality relations. In the latter case, samples may be drawn from the variational distributions using Markov Chain Monte Carlo (MCMC) techniques.

The training phase proceeds by optimising parameters of the variational distributions $q(\mathbf{u}_{\text{int}})$, $q(\mathbf{u}_{\text{dec}})$, $q(\mathbf{w}_n)$ to maximise the marginal likelihood $p(X)$ of the training data under the model. The marginal likelihood $p(X)$ corresponds to the average probability density associated with each training image being generated when a latent variable $\mathbf{w}^*$ is sampled from the prior distribution $p(w)$, and is passed through an intermediate response function sampled from the GP $q(f_{\text{int}})$ and a deconvolutional response function sampled from GP $q(f_{\text{dec}})$. Suitable optimisation methods include expectation propagation, Laplace-based methods, Renyi divergence minimisation, and variational Bayesian methods.

**Example implementation**

A specific implementation of the above training phase method will now be described. The present implementation is based on a variational Bayesian method. The variational distributions of the inducing variables and the latent variables in this example are Gaussian, given by $q(\mathbf{u}_{\text{dec}}) = \mathcal{N}(\mathbf{u}_{\text{dec}}|\mathbf{m}_{\text{dec}}, \mathbf{S}_{\text{dec}})$, $q(\mathbf{u}_{\text{int}}) = \mathcal{N}(\mathbf{u}_{\text{int}}|\mathbf{m}_{\text{int}}, \mathbf{S}_{\text{int}})$, and $q(\mathbf{w}_n) = \mathcal{N}(\mathbf{w}_n|\mathbf{m}_{\mathbf{w}_n}, \mathbf{S}_{\mathbf{w}_n})$ for $n = 1, ...,N$. In order to ensure positive-definiteness of the covariances $\mathbf{S}_{\text{dec}}$, $\mathbf{S}_{\text{int}}$, $\mathbf{Sw}_n$, decompositions $\mathbf{S}_{\text{dec}} = \mathbf{L}_{\text{dec}}\mathbf{L}_{\text{dec}}^{\text{T}}$, $\mathbf{S}_{\text{dec}} = \mathbf{L}_{\text{int}}\mathbf{L}_{\text{int}}^{\text{T}}$, and $\mathbf{S}_{\mathbf{w}_n} = \mathbf{L}_{\mathbf{w}_n}\mathbf{L}_{\mathbf{w}_n}^{\text{T}}$ for $n = 1, ..., N$ are imposed, where $\mathbf{L}_{\text{dec}}$, $\mathbf{L}_{\text{int}}$, $\mathbf{L}_{\mathbf{w}_n}$ are restricted to having a lower triangular form, though in other implementations such decomposition may be unnecessary. In some implementations, the variational parameters $\mathbf{m}_{\mathbf{w}_n}$, $\mathbf{L}_{\mathbf{w}_n}$ for $n = 1, ... ,N$ are reparameterised using an auxiliary function referred to as an encoder network or a recognition network, in analogy with the encoder network in a VAE or an IWAE. Methods in which variational parameters reparameterised using an auxiliary function are typically referred to as amortised variational inference methods.

The method proceeds by optimising the variational parameters $\mathbf{m}_{\text{dec}}$, $\mathbf{L}_{\text{dec}}$, $\mathbf{m}_{\text{int}}$, $\mathbf{L}_{\text{int}}$, and $\mathbf{m}_{\mathbf{w}_n}$, $\mathbf{L}_{\mathbf{w}_n}$ for $n = 1, ..., N,$ of the variational distributions, along with the inducing inputs $Z_{\text{dec}}$, $Z_{\text{int}}$, with respect to a lower bound of the log marginal likelihood $\log p(X)$. Any suitable gradient-based optimisation method may be used, for example ordinary gradient descent, Adam, or Limited-Memory Broyden-Fletcher-Goldfarb-Shanno (L-BFGS), to iteratively update the variational parameters and the inducing inputs until predetermined convergence criteria are satisfied. The lower bound of the log marginal likelihood to be maximised is referred to as the evidence lower bound (ELBO), denoted $\mathcal{L}$, and is given by Equation (11):

$$\mathcal{L} = \sum_{n=1}^{N} \left\{ \sum_{p=1}^{P} \mathbb{E}_{q(\mathbf{w}_n)q(f_{\text{int}})q(f_{\text{dec}})} \left[ \log p\left( x_{n,p} \Big| f_{\text{dec},p}\left(f_{\text{int}}(\mathbf{w}_n)\right)\right)\right] \right.$$

$$\left. - \text{KL}[q(\mathbf{w}_n)\|p(\mathbf{w}_n)] \right\} - \text{KL}[q(\mathbf{u}_{\text{int}})\|p(\mathbf{u}_{\text{int}})] \tag{11}$$

$$- \text{KL}[q(\mathbf{u}_{\text{dec}})\|p(\mathbf{u}_{\text{dec}})],$$

where KL denotes the Kuller-Leibler divergence. The variational process $q(f_{\text{dec}}(\cdot))$ is given by Equation (12):

$$q(f_{\text{dec}}(\cdot)) = \text{GP}\big(f(\cdot)\,\big|\, \mu_{\text{dec}}, \sigma_{\text{dec}}^2\big), \qquad (12)$$

where

$$\mu_{\text{dec}}(\cdot) = \mathbf{k}_{\mathbf{u}_{\text{dec}}}(\cdot)^{\mathrm{T}} \mathbf{K}_{\mathbf{u}_{\text{dec}}\mathbf{u}_{\text{dec}}}^{-1} \mathbf{m}_{\text{dec}}, \qquad (13)$$

and

$$\sigma_{\text{dec}}^2(\cdot,\cdot) = k_{\text{dec}}(\cdot,\cdot) \\ + \mathbf{k}_{\mathbf{u}_{\text{dec}}}(\cdot)^{\mathrm{T}} \mathbf{K}_{\mathbf{u}_{\text{dec}}\mathbf{u}_{\text{dec}}}^{-1}\big(\mathbf{S}_{\text{dec}} - \mathbf{K}_{\mathbf{u}_{\text{dec}}\mathbf{u}_{\text{dec}}}\big)\mathbf{K}_{\mathbf{u}_{\text{dec}}\mathbf{u}_{\text{dec}}}^{-1}\mathbf{k}_{\mathbf{u}_{\text{dec}}}(\cdot), \qquad (14)$$

with covariance tensors given by Equations (15) and (16):

$$\mathbf{K}_{\mathbf{u}_{\text{dec}}\,\mathbf{u}_{\text{dec}}}[m,n] = k_g\big(\mathbf{z}_{\text{dec},m}, \mathbf{z}_{\text{dec},n}\big), \qquad (15)$$

and

$$\mathbf{k}_{\mathbf{u}_{\text{dec}}}\left(\mathbf{h}_n^{[p]}\right) = k_g\left(\mathbf{h}_n^{[p]}, \mathbf{z}_{\text{dec}}\right). \qquad (16)$$

The variational process $q(f_{\text{int}}(\cdot))$ is similarly defined, with covariance tensors given by Equations (17) and (18):

$$\mathbf{K}_{\mathbf{u}_{\text{int}}\,\mathbf{u}_{\text{int}}}[m,n] = k_{\text{int}}\big(\mathbf{z}_{\text{int},m}, \mathbf{z}_{\text{int},n}\big), \qquad (17)$$

and

$$\mathbf{k}_{\mathbf{u}_{\text{int}}}(\mathbf{w}_n) = k_{\text{int}}(\mathbf{w}_n, \mathbf{z}_{\text{int}}). \qquad (18)$$

In addition to being dependent on $\mathbf{m}_{\text{dec}}$, $\mathbf{L}_{\text{dec}}$, $\mathbf{m}_{\text{int}}$, $\mathbf{L}_{\text{int}}$, $\mathbf{m}_{\mathbf{w}_n}$, $\mathbf{L}\mathbf{w}_n$, $Z_{\text{int}}$, $Z_{\text{dec}}$, the ELBO is dependent on hyperparameters of the patch response function $k_g$. As explained above with reference to Figure 2, for the patch response kernel of Equation (6), hyperparameters of $k_g$ may include a length scale hyperparameter $l_{\text{loc}}$ associated with the locational dependence of the patch response kernel, and may further include an additional length scale hyperparameter $l_{\text{patch}}$ associated with the element-wise dependence of the patch response kernel on the latent image patches. Depending on the forms of the location component and the patch component, additional or alternative hyperparameters may be included, such as a variance hyperparameter in the case of a Matern kernel. For best performance of the method, during the training phase the hyperparameters, in addition to the variational parameters and the inducing patches, are optimised with respect to the ELBO. In some examples, the hyperparameters and the inducing patches may be combined with the variational parameters and updated in a single update step. In other examples, the hyperparameters and/or the inducing inputs are updated in an inner optimisation loop, and the remaining parameters updated in an outer optimisation loop. It is noted that the variational parameters can be updated using natural gradient descent, whereas the hyperparameters and the inducing inputs cannot be updated using natural gradient descent, as the hyperparameters and the inducing inputs are not associated with a probability distribution, and hence the natural gradient is undefined. For examples in which the variational parameters are updated using natural gradient descent, an effective approach is to update the variational parameters using natural gradient descent followed by updating of the hyperparameters and the inducing inputs using one or more alternative optimisation methods. The resulting hybrid approach alternates between steps of natural gradient descent and the other chosen optimisation method. In a specific example, natural gradient descent is alternated with Adam.

Evaluating $\mathcal{L}$ and derivatives of $L$ requires evaluation of elements of the covariance tensors of Equations (15) and (16), and subsequently performing the matrix algebra of Equations (13) and (14). By placing the inducing inputs for the deconvolutional layer in the space of latent image patches, as opposed to the space of latent images, the number of kernel evaluations required for evaluating the covariance tensors of Equations (15) and (16) is reduced, with $\mathbf{K}_{\mathbf{u}_{dec}\mathbf{u}_{dec}}$ requiring $M^2$ evaluations of the kernel $k_g$ and $\mathbf{k}_{\mathbf{u}_{dec}}$ requiring $MNP$ evaluations of the kernel $k_g$. For comparison, placing the inducing inputs in the space of the training data results in the evaluation of $\mathbf{K}_{\mathbf{u}_{dec}\,\mathbf{u}_{dec}}$ requiring $M^2P^2$ evaluations of the kernel $k_g$ and the evaluation of $\mathbf{k}_{\mathbf{u}_{dec}}$ requiring $NMP^2$ evaluations of the kernel $k_g$. Placing the inducing inputs in the space of patches significantly reduces the computational cost of evaluating the ELBO and derivatives of the ELBO, and therefore the computational cost of the optimising the parameters. In order to further reduce the computational cost of optimisation, the present implementation employs stochastic optimisation in which minibatches of training data of size $N' << N$ are selected at random from $X$ at each iteration of the optimisation. The summation in the ELBO is then over $N'$ as opposed to $N$. In other implementations, optimisation of the parameters may be performed in a distributed manner, with a set of processors computing the expectation terms in $\mathcal{L}$ (or in a minibatch) in parallel.

The KL terms in Equation (11) are closed form as $p(\mathbf{u}_{int})$, $p(\mathbf{u}_{dec})$, $p(w_n)$ $q(\mathbf{u}_{int})$, $q(\mathbf{u}_{dec})$, $q(\mathbf{w}_n)$ are Gaussian distributions. In the present implementation, the expectation integrals in Equation (11) (and the corresponding derivatives), are calculated using Gauss-Hermite quadrature, though in other implementations, other integration methods may be used, for example Monte Carlo sampling and/or analytic methods in the case a Gaussian likelihood. In some examples, the expectation under $q(\mathbf{w}_n)$ is estimated by setting $\mathbf{w}_n = m\mathbf{w}_n + \mathbf{L}_{\mathbf{w}_n}\xi_n$ where $\xi_n \sim \mathcal{N}(\mathbf{0}, \mathbf{I})$, and drawing Monte Carlo samples of $\xi_n$, resulting in differentiable unbiased estimates of the expectation under $q(\mathbf{w}_n)$, and analogous methods may be used for the expectation under $q(f_{dec}(\mathbf{x}_n))$, $q(f_{int}(\mathbf{x}n))$. In any case, estimating the expectation integrals in Equation (11) involves drawing samples from the respective variational distribution $q(\mathbf{u}_{int})$, $q(\mathbf{u}_{dec})$, $q(\mathbf{w}_n)$ (randomly in the case of Monte Carlo sampling, or as deterministic functions of the parameters in the case of Gauss-Hermite quadrature), and processing the samples to estimate the expectation integrals.

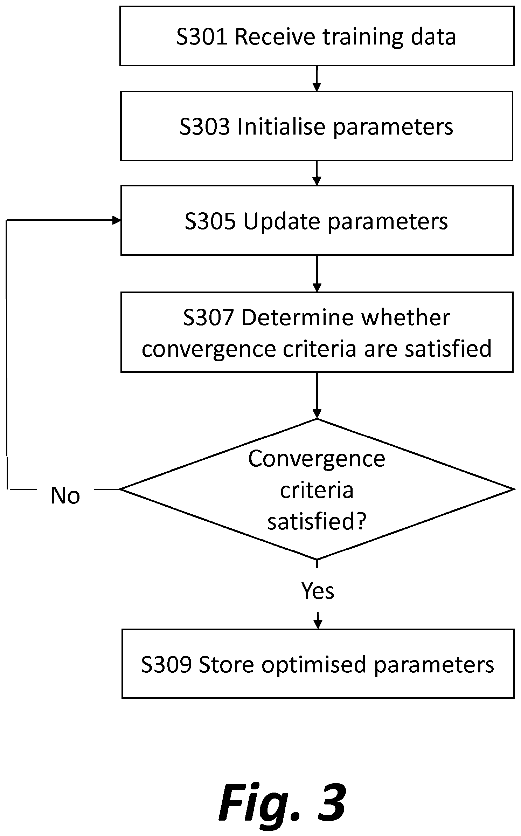

In the present implementation, optimising the variational parameters, the inducing inputs, and the hyperparameters, is referred to as the training phase. Figure 3 shows an example of a method executed by a computer system for implementing the training phase. The computer system receives, at S301, training data including the set $X$ of training images.

The computer system initialises, at S303, parameters for the GPs $q(f_{dec})$, $q(f_{int})$, and for the variational distributions $q(\mathbf{w}_n)$ for $n = 1, ..., N$. In the implementation described above, initialising the parameters for the GPs includes initialising the parameters $\mathbf{m}_{dec}$, $\mathbf{L}_{dec}$, $\mathbf{m}_{int}$, $\mathbf{L}_{int}$, $\mathbf{L}\mathbf{w}_n$, $m\mathbf{w}_n$, $Z_{dec}$, $Z_{int}$, along with the hyperparameters of the patch response kernel $k_g$. In the present implementation, the parameters are initialised randomly, though in other examples other methods may be used. For example, inducing patches $Z_{dec}$ may be initialised using a predetermined set of latent image patches. In some examples, the parameters of the variational distributions $q(\mathbf{w}_n)$ are reparameterised using an encoder network, and initialising the parameters of the variational distributions involves initialising parameters of the encoder network. It will be appreciated that other approaches for initialising the parameters are equally valid and may be used without departing from the scope of the invention. For the present implementation, in which the GP prior over the intermediate response function $f_{int}$ has a mean function of zero, initialising the variational parameters $\mathbf{m}_{int}$, $\mathbf{L}_{int}$ to have very small magnitudes (for example, of the order of $10^{-6}$) has been found to improve the speed of the optimisation process, as it results in the intermediate layer being almost deterministic initially. In the present implementation, the hyperparameters of the global response kernel are initialised randomly, though in other examples user-defined initial values may be chosen for one or more of the variational parameters (for example, in the case of the product kernel of Equation (6), the length scale $l_{loc}$ may be initialised to the width W or the height H of images within the training data, such that the location component $k_{loc}$ would be expected to capture location-based information on the scale of the images).

The computer system iteratively updates, at S305, the parameters of the GPs and the variational distributions to increase the marginal likelihood $p(X)$ of the dataset $X$ under the model. For the variational Bayesian method described above, the parameters are updated using gradient-based optimisation, to increase the value of the ELBO, which has the effect of increasing the marginal likelihood of the dataset under the model. In some examples, minibatch optimisation is used to reduce the computational cost of calculating the derivatives. Furthermore, in some examples the hyperparameters and the inducing inputs are updated simultaneously with the variational parameters, or in a separate update step as described above.

The computer system determines, at S307, whether predefined convergence criteria are satisfied. Any suitable convergence criteria known in the art may be used. If the computer system determines that the convergence criteria are not satisfied, the method returns to S305. If the computer system determines that the convergence criteria are satisfied, the parameters of the GPs are determined to be optimised, and the training phase is complete. The optimised parameters are stored at S309, and are ready to be used for image generation, as will be described hereafter.

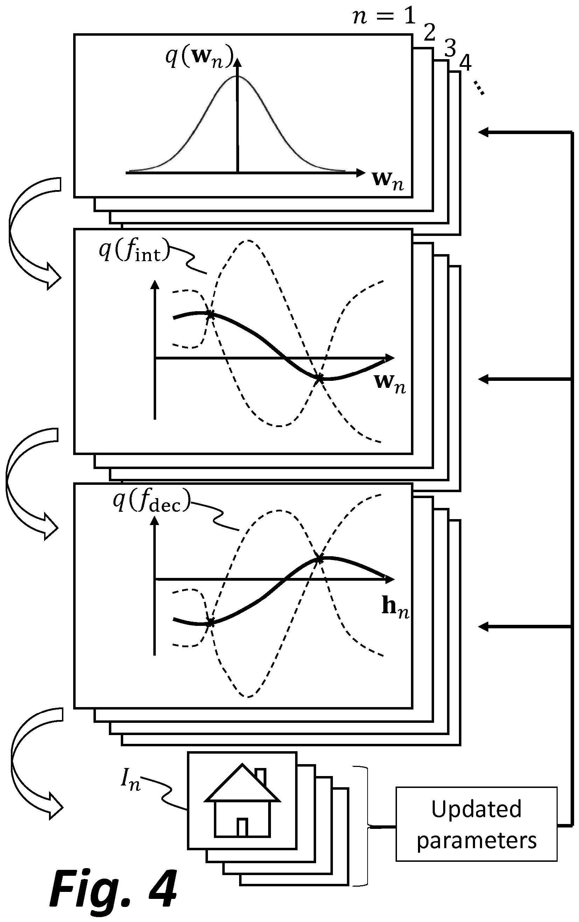

Figure 4 illustrates the training phase schematically. Images $I_n$ within the training dataset X are processed using the parameters for the variational distributions $q(\mathbf{w}_n)$ and for the GPs $q(f_{dec})$, $q(f_{int})$, to generate updated parameters for the variational distributions $q(\mathbf{w}_n)$ and for the GPs $q(f_{dec})$, $q(f_{int})$, such that the updated parameters result in an increased value of the marginal likelihood $p(X)$ of the training dataset X. As mentioned above, the marginal likelihood corresponds to the average probability density associated with each image $I_n$ being generated when a latent variable $\mathbf{w}^*$ is sampled from the prior distribution p($\mathbf{w}$), and is passed through an intermediate response function sampled from the GP $q(f_{int})$ and a deconvolutional response function sampled from GP $q(f_{dec})$.

## Results for handwritten digits

Table 1 shows results of density estimation for images taken from a binarized version of the publicly accessible Modified National Institute of Standards and Technology (MNIST) dataset using the method described above (referred to as MOCK-GP). In the binarized version, the pixel value of each pixel of each greyscale image is stochastically set to 1 with probability proportional to the pixel intensity, and is otherwise set to zero. The MNIST dataset contains 60000 training images of handwritten digits, and a further 10000 test images. The images each contain 28 $\times$ 28 pixels. For comparison, density estimation was performed using a variational autoencoder (VAE), and an importance weighted autoencoder (IWAE), and using the GP-LVM mentioned earlier. Table 1 also shows the negative log likelihood (NLL) for the full test set of $N_s$ = 10000 images, trained using different numbers $N$ of training images. The NLL is given by

$$-\sum_{n=1}^{N_s} \log p(\mathbf{x}_n^*)/N_s$$

, where $\mathbf{x}_n^*$ for $n$ = 1, ..., $N_s$ denote the images in the test set. A lower NLL indicates that the images in the test set have a higher mean probability density, and accordingly would be more likely to be generated under the corresponding generative model. Table 1 also shows the NLL for the training data.

Table 1: density estimation results for binarized MNIST images

|  | VAE |  | IWAE |  | GP-LVM |  | MOCK-GP |  |
| --- | --- | --- | --- | --- | --- | --- | --- | --- |
| $N$ | Test | Train | Test | Train | Test | Train | Test | Train |
| 10 | 482.8 | 17.9 | 504.1 | 6.3 | 328.6 | 122.1 | 231.6 | 166.0 |
| 100 | 500.4 | 21.8 | 497.5 | 9.0 | 186.4 | 171.0 | 178.7 | 142.0 |
| 1000 | 266.9 | 90.6 | 200.4 | 97.6 | 161.9 | 156.4 | 157.3 | 155.4 |

It is observed from Table 1 that MOCK-GP outperforms the other models on the test data. The difference is most pronounced in the lowest data regime (N = 10), where the prior correlations between pixels introduced by the MOCK result in the MOCK-GP being more likely to generate sensible output images. It is noted that the CNN models (the IWAE and the VAE) overfit the training data, resulting in large discrepancies between the NLLs for the training data and for the test data.

## Image generation phase

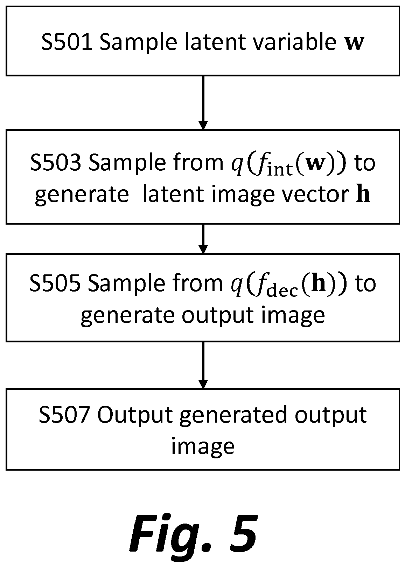

Once the parameters of the GPs $q(f_{dec})$, $q(f_{int})$, have been optimised, the GP model has been trained and is ready to be used for image generation. Figure 5 shows an example of a method executed by a computer system for implementing image generation. Prior to the method of Figure 5 being executed, a training phase is carried out (for example, the training phase described with reference to Figure 3), such that the computer system stores a set of optimised parameters for variational GPs $q(f_{dec})$, $q(f_{int})$.

The computer system samples, at S501, a latent variable $\mathbf{w}^*$ from the prior distribution p(w). The computer system samples, at S503, from the distribution $q(f_{int}(\mathbf{w}^*))$ to generate a latent image corresponding to a latent image vector $\mathbf{h}^*$. The computer system samples, at S505, from the distribution $q(f_{dec}(\mathbf{h}^*))$, to generate an output image corresponding to the output image vector $\mathbf{x}^*$. Generating the output image includes processing the sampled output $f_{dec}(\mathbf{h}^*)$ using the likelihood $p(\mathbf{x}^*|f_{dec}(\mathbf{h}^*))$.

The computer system outputs the generated output image at S507 (for example, by rendering the generated image on a display, or storing the generated image in memory).

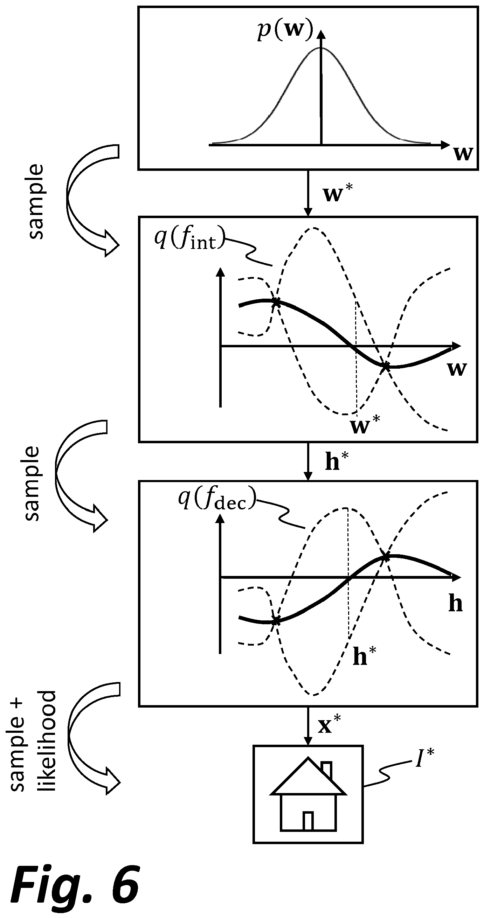

Figure 6 illustrates the image generation phase schematically. A latent variable $\mathbf{w}^*$ is sampled from the prior distribution $p(\mathbf{w})$. In Figure 6, the prior distribution is represented as a one-dimensional Gaussian distribution, corresponding to one-dimensional latent variables $\mathbf{w}$. In practice, the prior distribution $p(\mathbf{w})$ may be a multivariate Gaussian distribution, or another type of probability distribution, as discussed above. The GP $q(f_{int})$ is evaluated at the sampled latent variable $\mathbf{w}^*$, resulting in a multivariate distribution $q(f_{int}(\mathbf{w}^*))$. In Figure 5, the GP $q(f_{int})$ is represented as a single output GP, but in practice, the GP $q(f_{int})$ is a multi-output GP with $D$ outputs. Accordingly, the distribution $q(f_{int}(\mathbf{w}^*))$ is a multivariate Gaussian distribution with $D$ dimensions. A latent image vector $\mathbf{h}^*$, corresponding to a latent image $J^*$, is sampled from the multivariate Gaussian distribution $q(f_{int}(\mathbf{w}^*))$. The GP $q(f_{dec})$ is evaluated at the sampled latent image

vector $\mathbf{h}^*$, resulting in a multivariate distribution $q(f_{dec}(\mathbf{h}^*))$. In Figure 5, the GP $q(f_{dec})$ is represented as a single output GP, but in practice, the GP $q(f_{int})$ is a multi-output GP with $P$ outputs. An image vector $\mathbf{x}^*$, corresponding to an output image $I^*$, is generated from the multivariate Gaussian distribution $q(f_{dec}(\mathbf{h}^*))$. Generating the image vector $\mathbf{x}^*$ involves sampling a D-dimensional from the multivariate Gaussian distribution $q(f_{dec}(\mathbf{h}^*))$, and passing the sampled vector through the likelihood $p(\mathbf{x}^*|f_{dec}(\mathbf{h}^*))$.

**Example computer system**

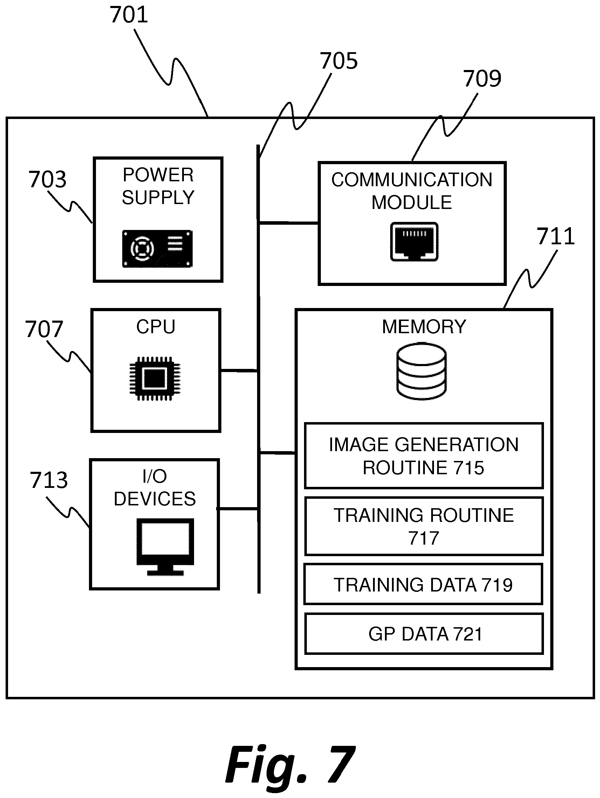

Figure 7 shows an example of a computer system 701 arranged to generate image data in accordance with the present method. In this example, the computer system 701 is arranged to perform both the training phase and the image generation phase. The computer system 701 includes a power supply 703 and a system bus 705. The system bus 705 is connected to: a CPU 707; a communication module 709; a memory 711; and input/output devices 713. The memory 711 holds: an image generation routine 715; a training routine 717; training data 719; and GP data 721. The GP data includes variational parameters and hyperparameters. Executing the training routine 717 causes the CPU 707 to process the training data 719 in accordance with Figure 3 to update the GP data 721. Executing the image generation routine 715 causes the CPU to generate image data in accordance with Figure 5.

In other examples, the training phase may be performed by a first computer system, and the image generation phase may be performed by a second, different computer system remote from the first computer system. In such examples, after performing the training phase, the first computer system must transmit the updated GP data to the second computer system before the second computer system performs the image generation phase. Either or each of these phases may be performed using a distributed computer system (for example, for distributed computation of the ELBO in the training phase, as discussed above).

**Further embodiments and modifications**

The above embodiments are to be understood as illustrative examples of the invention. Further embodiments of the invention are envisaged. For example, the method described herein may extended such that the intermediate response function $f_{int}$ has a deep GP prior based on a composition of functions $f_{int}(\cdot) = f_L(...,f_2(f_1(\cdot)))$, where each component function $f_l$ is given a GP prior. One or more of these GP priors may be based on the MOCK or MOTICK described herein. Although GP models are capable of learning complex nonlinear structures due to the flexibility of the GP prior (in contrast with neural networks, which are only able to learn nonlinear structures by virtue of deep network architectures), including a deep GP structure may further improve the learning capacity of the GP model described above, resulting in improved performance for image generation. Finally, the MOCK or MOTICK may be used as a layer in a deep GP model for regression or classification tasks.

**Claims**

1.  A computer-implemented method of training a computer system to generate output images in dependence on a plurality of training images $I_n$, the method comprising:

    receiving training data comprising a plurality of image vectors $\mathbf{x}_n$ each corresponding to a respective one of the plurality of training images $I_n$;
    initialising a first set of parameters comprising, for each of the plurality of image vectors $\mathbf{x}_n$, one or more parameters for a respective variational distribution over latent variables $\mathbf{w}_n$;
    initialising a second set of parameters for a deep Gaussian process (GP), the deep GP comprising:

    a first GP $q(f_{int})$ defined by a first kernel $k_{int}$ and corresponding to a distribution over first functions $f_{int}$ for mapping latent variables $\mathbf{w}_n$ to respective latent image vectors $\mathbf{h}_n$, each latent image vector $\mathbf{h}_n$ comprising a plurality of elements, and
    a second GP $q(f_{dec})$ defined by a second kernel $k_{dec}$ and corresponding to a distribution over second functions $f_{dec}$ for mapping latent image vectors $\mathbf{h}_n$ to respective output image vectors $\mathbf{x}_n$; and

    iteratively updating the first set of parameters and the second set of parameters to increase an average probability density associated with each image vector $\mathbf{x}_n$ being generated when a sampled latent variable $\mathbf{w}_n$ is passed through a first function $f_{int}$ sampled from the first GP $q(f_{int})$ and a second function $f_{dec}$ sampled from second GP $q(f_{dec})$, wherein:

the second functions $f_{\text{dec}}$ are arranged to map patch vectors $\mathbf{h}_n^{[p]}$ of a latent image vector $\mathbf{h}_n$ to respective different elements $x_{n,p}$ of an output image vector $\mathbf{x}_n$ corresponding to an output image $I_n$, each patch vector $\mathbf{h}_n^{[p]}$ of said latent image vector $\mathbf{h}_n$ comprising a subset of the elements of said latent image vector $\mathbf{h}_n$;

the second kernel $k_{\text{dec}}$ takes into account a location $(i(p),j(p))$ in the output image $I_n$ of a pixel corresponding to an element $x_{n,p}$ of the output image vector $\mathbf{x}_n$; and

the second kernel $k_{\text{dec}}$ is a product of a patch component $k_{\text{patch}}$ and a location component $k_{\text{loc}}$, wherein the patch component $k_{\text{patch}}$ takes into account the elements of the patch vector $\mathbf{h}_n^{[p]}$, and the location component $k_{\text{loc}}$ takes into account the location $(i(p),\ j(p))$ in the output image $I_n$ of the pixel corresponding to the element $x_{n,p}$ of the output image vector $\mathbf{x}_n$, such that

$$k_{\text{dec},p,p'}\left(\mathbf{h}_m, \mathbf{h}_n\right) = k_{\text{patch}}\left(\mathbf{h}_n^{[p]}, \mathbf{h}_m^{[p']}\right) \times k_{\text{loc}}\bigl((i(p),j(p)),(i(p'),j(p'))\bigr).$$

2. The method of claim 1, wherein the second kernel $k_{\text{dec}}$ takes into account a distance between the locations of the pixels in the output image $I_n$.

3. The method claim 1 or 2, wherein the second set of parameters comprises a length scale hyperparameter associated with the dependence of the second kernel $k_{\text{dec}}$ on the locations of the pixels in the output image $I_n$.

4. The method of any previous claim, wherein updating the first set of parameters and the second set of parameters comprises using gradient-based optimisation to increase a variational lower bound of the marginal log likelihood of the training data under the deep GP.

5. The method of any previous claim, wherein the second GP $q(f_{\text{dec}})$ is a deep GP comprising a plurality of layers, each layer having an associated GP prior.

6. A computer-implemented method of generating a first output image $I^*$, the method comprising:

storing a set of parameters for a deep Gaussian process (GP), the deep GP comprising:

a first GP $q(f_{\text{int}})$ defined by a first kernel $k_{\text{int}}$ and corresponding to a distribution over first functions $f_{\text{int}}$ for mapping latent variables $\mathbf{w}_n$ to respective latent image vectors $\mathbf{h}_n$, each latent image vector $\mathbf{h}_n$ comprising a plurality of elements, and

a second GP $q(f_{\text{dec}})$ defined by a second kernel $k_{\text{dec}}$ and corresponding to a distribution over second functions $f_{\text{dec}}$ for mapping latent image vectors $\mathbf{h}_n$ to respective output image vectors $\mathbf{x}_n$;

sampling from a prior distribution p(w) over latent variables $\mathbf{w}$ to generate a sampled latent variable $\mathbf{w}^*$;

sampling from the first GP $q(f_{\text{int}})$ evaluated at the sampled latent variable $\mathbf{w}^*$ to generate a sampled latent image vector $\mathbf{h}^*$; and

sampling from the second GP $q(f_{\text{dec}})$ evaluated at the sampled latent image vector $\mathbf{h}^*$ to generate a first output image vector $\mathbf{x}^*$ corresponding to the first output image $I^*$,

wherein:

the second functions $f_{\text{dec}}$ are arranged to map patch vectors $\mathbf{h}_n^{[p]}$ of a latent image vector $\mathbf{h}_n$ to respective different elements $x_{n,p}$ of an output image vector $\mathbf{x}_n$ corresponding to an output image $I_n$, each patch vector $\mathbf{h}_n^{[p]}$ of said latent image vector $\mathbf{h}_n$ comprising a subset of the elements of said latent image vector $\mathbf{h}_n$;

the second kernel $k_{\text{dec}}$ takes into account a location $(i(p),j(p))$ in the output image $I_n$ of a pixel corresponding to an element $x_{n,p}$ of the output image vector $\mathbf{x}_n$; and

the second kernel $k_{\text{dec}}$ is a product of a patch component $k_{\text{patch}}$ and a location component $k_{\text{loc}}$, wherein the

patch component $k_{patch}$ takes into account the elements of the patch vector $\mathbf{h}_n^{[p]}$, and the location component $k_{loc}$ takes into account the location (i(p),j(p)) in the output image $I_n$ of the pixel corresponding to the element $x_{n,p}$ of the output image vector $\mathbf{x}_n$, such that

$$k_{\text{dec},p,p'}(\mathbf{h}_m, \mathbf{h}_n) = k_{\text{patch}}\left(\mathbf{h}_n^{[p]}, \mathbf{h}_m^{[p']}\right) \times k_{\text{loc}}\big((i(p), j(p)), (i(p'), j(p'))\big).$$

7. The method of claim 6, wherein the second kernel $k_{dec}$ takes into account a distance between the locations of the pixels in the output image $I_n$.

8. The method of claim 6 or 7, wherein the second set of parameters comprises a length scale hyperparameter associated with the dependence of the second kernel $k_{dec}$ on the locations of the pixels in the output image $I_n$.

9. The method of any previous claim, wherein the second GP $q(f_{dec})$ is a deep GP comprising a plurality of layers, each layer having an associated GP prior.

10. A computer program product comprising machine-readable instructions which, when executed by processing circuitry of a computer system, cause the computer system to perform the method of any of the preceding claims.

11. A computer system arranged to perform the method of any of claims 1 to 9.

**Patentansprüche**

1. Computerimplementiertes Verfahren zum Trainieren eines Computersystems auf das Erzeugen von Ausgabebildern in Abhängigkeit von einer Vielzahl von Trainingsbildern $I_n$, wobei das Verfahren Folgendes umfasst:

Empfangen von Trainingsdaten, die eine Vielzahl von Bildvektoren $\mathbf{x}_n$ umfassen, die jeweils einem jeweiligen der Vielzahl von Trainingsbildern $I_n$ entsprechen;
Initialisieren eines ersten Satzes von Parametern, der, für jeden der Vielzahl von Bildvektoren $\mathbf{x}_n$, einen oder mehrere Parameter für eine jeweilige Variationsverteilung über latente Variablen $\mathbf{w}_n$ umfasst;
Initialisieren eines zweiten Satzes von Parametern für einen tiefen Gauß-Prozess (GP), wobei der tiefe GP Folgendes umfasst:

einen ersten GP $q(f_{int})$, der durch einen ersten Kernel $k_{int}$ definiert wird und einer Verteilung über erste Funktionen $f_{int}$ zum Abbilden latenter Variablen $\mathbf{w}_n$ auf jeweilige latente Bildvektoren $\mathbf{h}_n$ entspricht, wobei jeder latente Bildvektor $\mathbf{h}_n$ eine Vielzahl von Elementen umfasst, und
einen zweiten GP $q(f_{dec})$, der durch einen zweiten Kernel $k_{dec}$ definiert wird und einer Verteilung über zweite Funktionen $f_{dec}$ zum Abbilden latenter Bildvektoren $\mathbf{h}_n$ auf jeweilige Ausgabebildvektoren $\mathbf{x}_n$ entspricht; und
iteratives Aktualisieren des ersten Satzes von Parametern und
des zweiten Satzes von Parametern, um eine mittlere Wahrscheinlichkeitsdichte im Zusammenhang mit jedem Bildvektor $\mathbf{x}_n$, der erzeugt wird, wenn eine abgetastete latente Variable $\mathbf{w}_n$ eine erste Funktion $f_{int}$, die aus dem ersten GP $q(f_{ing})$ abgetastet wird, und eine zweite Funktion $f_{dec}$, die aus dem zweiten GP $q(f_{dec})$ abgetastet wird, durchläuft, zu erhöhen,
wobei:

die zweiten Funktionen $f_{dec}$ so angeordnet sind, dass sie Patchvektoren $h_n^{[p]}$ eines latenten Bildvektors $\mathbf{h}_n$ auf jeweilige unterschiedliche Elemente $x_{n,p}$ eines Ausgabebildvektors $\mathbf{x}_n$,
der einem Ausgabebild $I_n$ entspricht, abbilden, wobei jeder Patchvektor $h_n^{[p]}$ des latenten Bildvektors $\mathbf{h}_n$ eine Teilmenge der Elemente des latenten Bildvektors $\mathbf{h}_n$ umfasst;
der zweite Kernel $k_{dec}$ eine Position $(i(p), j(p))$ eines Pixels in dem Ausgabebild $I_n$, das einem Element $x_{n,p}$ des Ausgabebildvektors $\mathbf{x}_n$ entspricht, berücksichtigt; und
der zweite Kernel $k_{dec}$ ein Produkt aus einer Patchkomponente $k_{patch}$ und einer Positionskomponente $k_{loc}$ ist, wobei die Patchkomponente $k_{patch}$ die Elemente des Patchvektors $h_n^{[p]}$ berücksichtigt, und die Positionskomponente $k_{loc}$ die Position ($i(p)$, $j(p)$) des Pixels in dem Ausgabebild $I_n$, das dem Element $x_{n,p}$ des Ausgabebildvektors $\mathbf{x}_n$ entspricht, berücksichtigt, sodass

$$k_{\texttt{dec},p,p'}(\mathbf{h}_m,\ \mathbf{h}_n)\ =\ k_{\texttt{patch}}(\mathbf{h}_n{}^{[p]},\ \mathbf{h}_m{}^{[p']})\ \times\ k_{\texttt{loc}}((i(p),\ j(p)),\ (i(p'),\ j(p'))).$$

2. Verfahren nach Anspruch 1, wobei der zweite Kernel $k_{dec}$ einen Abstand zwischen den Positionen der Pixel in dem Ausgabebild $I_n$ berücksichtigt.

3. Verfahren nach Anspruch 1 oder 2, wobei der zweite Satz von Parametern einen Längenskalen-Hyperparameter im Zusammenhang mit der Abhängigkeit des zweiten Kernels $k_{dec}$ von den Positionen der Pixel in dem Ausgabebild $I_n$ umfasst.

4. Verfahren nach einem der vorhergehenden Ansprüche, wobei das Aktualisieren des ersten Satzes von Parametern und des zweiten Satzes von Parametern das Verwenden einer gradientenbasierten Optimierung umfasst, um eine Variationsuntergrenze der marginalen logarithmischen Wahrscheinlichkeit der Trainingsdaten unter dem tiefen GP zu erhöhen.

5. Verfahren nach einem der vorhergehenden Ansprüche, wobei der zweite GP $q$ ($f_{dec}$) ein tiefer GP ist, der eine Vielzahl von Schichten umfasst, wobei jede Schicht einen zugeordneten GP-Prior aufweist.

6. Computerimplementiertes Verfahren zum Erzeugen eines ersten Ausgabebilds $I^*$, wobei das Verfahren Folgendes umfasst:
   Speichern eines Satzes von Parametern für einen tiefen Gauß-Prozess (GP), wobei der tiefe GP Folgendes umfasst:

   einen ersten GP $q(f_{int})$, der durch einen ersten Kernel $k_{int}$ definiert wird und einer Verteilung über erste Funktionen $f_{int}$ zum Abbilden latenter Variablen $\mathbf{w}_n$ auf jeweilige latente Bildvektoren $\mathbf{h}_n$ entspricht, wobei jeder latente Bildvektor $\mathbf{h}_n$ eine Vielzahl von Elementen umfasst, und
   einen zweiten GP $q(f_{dec})$, der durch einen zweiten Kernel $k_{dec}$ definiert wird und einer Verteilung über zweite Funktionen $f_{dec}$ zum Abbilden latenter Bildvektoren $\mathbf{h}_n$ auf jeweilige Ausgabebildvektoren $\mathbf{x}_n$ entspricht;
   Abtasten aus einer Prior-Verteilung p($\mathbf{w}$) über latente Variablen $\mathbf{w}$, um eine abgetastete latente Variable $\mathbf{w}^*$ zu erzeugen;
   Abtasten aus dem ersten GP $q(f_{int})$, der mit der abgetasteten latenten Variable $\mathbf{w}^*$ bewertet wurde, um einen abgetasteten latenten Bildvektor $\mathbf{h}^*$ zu erzeugen; und
   Abtasten aus dem zweiten GP $q(f_{dec})$, der mit dem abgetasteten latenten Bildvektor $\mathbf{h}^*$ bewertet wurde, um einen ersten Ausgabebildvektor $\mathbf{x}^*$ zu erzeugen, der dem ersten Ausgabebild $I^*$ entspricht,
   wobei:

   die zweiten Funktionen $f_{dec}$ so angeordnet sind, dass sie Patchvektoren $h_n{}^{[p]}$ eines latenten Bildvektors $\mathbf{h}_n$ auf jeweilige unterschiedliche Elemente $x_{n,p}$ eines Ausgabebildvektors $\mathbf{x}_n$, der einem Ausgabebild $I_n$ entspricht, abbilden, wobei jeder Patchvektor $h_n{}^{[p]}$ des latenten Bildvektors $\mathbf{h}_n$ eine Teilmenge der Elemente des latenten Bildvektors $\mathbf{h}_n$ umfasst;
   der zweite Kernel $k_{dec}$ eine Position ($i(p)$, $j(p)$) eines Pixels in dem Ausgabebild $I_n$, das einem Element $x_{n,p}$ des Ausgabebildvektors $\mathbf{x}_n$ entspricht, berücksichtigt; und
   der zweite Kernel $k_{dec}$ ein Produkt aus einer Patchkomponente $k_{patch}$ und einer Positionskomponente $k_{loc}$ ist, wobei die Patchkomponente $k_{patch}$ die Elemente des Patchvektors $h_n{}^{[p]}$ berücksichtigt, und die Positionskomponente $k_{loc}$ die Position ($i(p)$, $j(p)$) des Pixels in dem Ausgabebild $I_n$, das dem Element $x_{n,p}$ des Ausgabebildvektors $\mathbf{x}_n$ entspricht, berücksichtigt,
   sodass

   $$k_{\texttt{dec},p,p'}(\mathbf{h}_m,\ \mathbf{h}_n)\ =\ k_{\texttt{patch}}(\mathbf{h}_n{}^{[p]},\ \mathbf{h}_m{}^{[p']})\ \times\ k_{\texttt{loc}}((i(p),\ j(p)),\ (i(p'),\ j(p'))).$$

7. Verfahren nach Anspruch 6, wobei der zweite Kernel $k_{dec}$ einen Abstand zwischen den Positionen der Pixel in dem Ausgabebild $I_n$ berücksichtigt.

**8.** Verfahren nach Anspruch 6 oder 7, wobei der zweite Satz von Parametern einen Längenskalen-Hyperparameter im Zusammenhang mit der Abhängigkeit des zweiten Kernels $k_{dec}$ von den Positionen der Pixel in dem Ausgabebild $I_n$ umfasst.

**9.** Verfahren nach einem der vorhergehenden Ansprüche, wobei der zweite GP $q$ ($f_{dec}$) ein tiefer GP ist, der eine Vielzahl von Schichten umfasst, wobei jede Schicht einen zugeordneten GP-Prior aufweist.

**10.** Computerprogrammprodukt, das maschinenlesbare Anweisungen umfasst, die, bei Ausführung durch Verarbeitungsschaltungen eines Computersystems, das Computersystem veranlassen, das Verfahren nach einem der vorhergehenden Ansprüche durchzuführen.

**11.** Computersystem, das zur Durchführung des Verfahrens nach einem der Ansprüche 1 bis 9 ausgelegt ist.

**Revendications**

**1.** Procédé mis en œuvre par ordinateur d'entraînement d'un système informatique pour générer des images de sortie en fonction d'une pluralité d'images d'entraînement $I_n$, le procédé comprenant :

la réception de données d'entraînement comprenant une pluralité de vecteurs d'image $\mathbf{x}_n$ correspondant chacun à l'une respective de la pluralité d'images d'entraînement $I_n$;
l'initialisation d'un premier ensemble de paramètres comprenant, pour chacun de la pluralité de vecteurs d'image $\mathbf{x}_n$, un ou plusieurs paramètres pour une distribution variable respective sur des variables latentes $\mathbf{w}_n$;
l'initialisation d'un deuxième ensemble de paramètres pour un processus gaussien (GP) profond, le GP profond comprenant :

un premier GP $q(f_{int})$ défini par un premier noyau $k_{int}$ et correspondant à une distribution sur des premières fonctions ($f_{int}$) pour mapper des variables latentes $\mathbf{w}_n$ sur des vecteurs d'image latente $\mathbf{h}_n$ respectifs, chaque vecteur d'image latente $\mathbf{h}_n$ comprenant une pluralité d'éléments, et
un deuxième GP $q(f_{dec})$ défini par un deuxième noyau $k_{dec}$ et correspondant à une distribution sur des deuxièmes fonctions $f_{dec}$ pour mapper des vecteurs d'image latente $\mathbf{h}_n$ sur des vecteurs d'image de sortie $\mathbf{x}_n$ respectifs ; et
la mise à jour itérative du premier ensemble de paramètres et du deuxième ensemble de paramètres pour augmenter une densité de probabilité moyenne associée à chaque vecteur d'image $\mathbf{x}_n$ qui est généré lorsqu'une variable latente échantillonnée $\mathbf{w}_n$ est passée à travers une première fonction $f_{int}$ échantillonnée à partir du premier GP $q(f_{int})$ et une deuxième fonction $f_{dec}$ échantillonnée à partir du deuxième GP $q(f_{dec})$, dans lequel :

les deuxièmes fonctions $f_{dec}$ sont agencées pour mapper des vecteurs de correctif $\mathbf{h}_n^{[p]}$ d'un vecteur d'image latente $\mathbf{h}_n$ sur des éléments différents $\mathbf{x}_{n,p}$ respectifs d'un vecteur d'image de sortie $\mathbf{x}_n$ correspondant à une image de sortie $I_n$, chaque vecteur de correctif $h_n^{[p]}$ dudit vecteur d'image latente $\mathbf{h}_n$ comprenant un sous-ensemble des éléments dudit vecteur d'image latente $\mathbf{h}_n$;
le deuxième noyau $k_{dec}$ prend en compte un emplacement (i(p), j(p)) dans l'image de sortie $I_n$ d'un pixel correspondant à un élément $x_{n,p}$ du vecteur d'image de sortie $\mathbf{x}_n$ ; et
le deuxième noyau $k_{dec}$ est un produit d'un composant de correctif $k_{patch}$ et d'un composant d'emplacement $k_{loc}$,
dans lequel le composant de correction $k_{patch}$ prend en compte les éléments du vecteur de correctif $\mathbf{h}_n^{[p]}$, et le composant d'emplacement $k_{loc}$ prend en compte l'emplacement (i(p), j(p)) dans l'image de sortie $I_n$ du pixel correspondant à l'élément $x_{n,p}$ du vecteur d'image de sortie $\mathbf{x}_n$, de sorte que

$$k_{dec,p,p'}(\mathbf{h}_m, \mathbf{h}_n) = k_{patch}(\mathbf{h}_n^{[p]}, \mathbf{h}_m^{[p']}) \times k_{loc}((i(p), j(p)), (i(p'), j(p'))).$$

**2.** Procédé selon la revendication 1, dans lequel le deuxième noyau $k_{dec}$ prend en compte une distance entre les emplacements des pixels dans l'image de sortie $I_n$.

**3.** Procédé selon la revendication 1 ou 2, dans lequel le deuxième ensemble de paramètres comprend un hyperparamètre d'échelle de longueur associé à la dépendance du deuxième noyau $k_{dec}$ aux emplacements des pixels dans l'image de sortie $I_n$.

4. Procédé selon l'une quelconque des revendications précédentes, dans lequel la mise à jour du premier ensemble de paramètres et du deuxième ensemble de paramètres comprend l'utilisation d'une optimisation basée sur gradient pour augmenter une limite inférieure de variation de la probabilité de logarithme marginale des données d'entraînement dans le cadre du GP profond.

5. Procédé selon l'une quelconque des revendications précédentes, dans lequel le deuxième GP $q$ $(f_{dec})$ est un GP profond comprenant une pluralité de couches, chaque couche ayant un GP associé antérieur.

6. Procédé mis en œuvre par ordinateur de génération d'une première image de sortie $I^*$, le procédé comprenant :
le stockage d'un ensemble de paramètres pour un processus gaussien (GP) profond, le GP profond comprenant :

   un premier GP $q(f_{int})$ défini par un premier noyau $k_{int}$ et correspondant à une distribution sur des premières fonctions $f_{int}$ pour mapper des variables latentes $\mathbf{w}_n$ sur des vecteurs d'image latente $\mathbf{h}_n$ respectifs, chaque vecteur d'image latente $\mathbf{h}_n$ comprenant une pluralité d'éléments, et
   un deuxième GP $q(f_{dec})$ défini par un deuxième noyau $k_{dec}$ et correspondant à une distribution sur des deuxièmes fonctions $f_{dec}$ pour mapper des vecteurs d'image latente $\mathbf{h}_n$ sur des vecteurs d'image de sortie $\mathbf{x}_n$ respectifs ;
   l'échantillonnage à partir d'une distribution antérieure p(w) sur des variables latentes w pour générer une variable latente échantillonnée $\mathbf{w}^*$;
   l'échantillonnage à partir du premier GP $q(f_{int})$ évalué à la variable latente échantillonnée $\mathbf{w}^*$ pour générer un vecteur d'image latente échantillonné $\mathbf{h}^*$ ; et
   l'échantillonnage à partir du deuxième GP $q(f_{dec})$ évalué au vecteur d'image latente échantillonné $\mathbf{h}^*$ pour générer un premier vecteur d'image de sortie $\mathbf{x}^*$ correspondant à la première image de sortie $I^*$, dans lequel :

   les deuxièmes fonctions $f_{dec}$ sont agencées pour mapper des vecteurs de correctif $\mathbf{h}_n^{[p]}$ d'un vecteur d'image latente $\mathbf{h}_n$ sur des éléments différents $x_{n,p}$ respectifs d'un vecteur d'image de sortie $\mathbf{x}_n$ correspondant à une image de sortie $I_n$, chaque vecteur de correctif $\mathbf{h}_n^{[p]}$ dudit vecteur d'image latente $\mathbf{h}_n$ comprenant un sous-ensemble des éléments dudit vecteur d'image latente $\mathbf{h}_n$ ;
   le deuxième noyau $k_{dec}$ prend en compte un emplacement $(i(p), j(p))$ dans l'image de sortie $I_n$ d'un pixel correspondant à un élément $x_{n,p}$ du vecteur d'image de sortie $\mathbf{x}_n$ ; et
   le deuxième noyau $k_{dec}$ est un produit d'un composant de correctif $k_{patch}$ et d'un composant d'emplacement $k_{loc}$,
   dans lequel le composant de correctif $k_{patch}$ prend en compte les éléments du vecteur de correctif $h_n^{[p]}$, et le composant d'emplacement $k_{loc}$ prend en compte l'emplacement $(i(p), j(p))$ dans l'image de sortie $I_n$ du pixel correspondant à l'élément $x_{n,p}$ du vecteur d'image de sortie $\mathbf{x}_n$, de sorte que

$$k_{dec,p,p'}(\mathbf{h}_m, \mathbf{h}_n) = k_{patch}(\mathbf{h}_n^{[p]}, \mathbf{h}_m^{[p']}) \times k_{loc}((i(p), j(p)), (i(p'), j(p'))).$$

7. Procédé selon la revendication 6, dans lequel le deuxième noyau $k_{dec}$ prend en compte une distance entre les emplacements des pixels dans l'image de sortie $I_n$.

8. Procédé selon la revendication 6 ou 7, dans lequel le deuxième ensemble de paramètres comprend un hyperparamètre d'échelle de longueur associé à la dépendance du deuxième noyau $k_{dec}$ aux emplacements des pixels dans l'image de sortie $I_n$.

9. Procédé selon l'une quelconque des revendications précédentes, dans lequel le deuxième GP q $(f_{dec})$ est un GP profond comprenant une pluralité de couches, chaque couche ayant un GP associé antérieur.

10. Produit programme informatique comprenant des instructions lisibles par ordinateur qui, lorsqu'elles sont exécutées par des circuits de traitement d'un système informatique, amènent le système informatique à réaliser le procédé de l'une quelconque des revendications précédentes.

11. Système informatique agencé pour réaliser le procédé de l'une quelconque des revendications 1 à 9.

**Fig. 1**

*a)* VAE

*b)* Uncorrelated GP-LVM

*c)* MOCK

*d)* MOTICK

*Fig. 2*

S301 Receive training data

S303 Initialise parameters

S305 Update parameters

S307 Determine whether convergence criteria are satisfied

Convergence criteria satisfied?

No

Yes

S309 Store optimised parameters

*Fig. 3*

**Fig. 4**

S501 Sample latent variable $\mathbf{w}$

S503 Sample from $q(f_{\mathrm{int}}(\mathbf{w}))$ to generate latent image vector $\mathbf{h}$

S505 Sample from $q(f_{\mathrm{dec}}(\mathbf{h}))$ to generate output image

S507 Output generated output image

# Fig. 5

**Fig. 6**

701

705

709

703

POWER
SUPPLY

COMMUNICATION
MODULE

711

707

CPU

MEMORY

IMAGE GENERATION
ROUTINE 715

TRAINING ROUTINE
717

713

I/O
DEVICES

TRAINING DATA 719

GP DATA 721

*Fig. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VAN DER WILK et al.** Convolutional Gaussian Processes. *31st Conference on Neural Information Processing Systems,* 2017
- **V. DUTORDOIR et al.** The article Gaussian Process Conditional Density Estimation. *arXiv:1810.12750,* 2018
- **K. BLOMQVIST et al.** Deep convolutional Gaussian processes. *arXiv:1810.03052,* 2018
- **VAN DER WILK.** *Convolutional Gaussian Processes*